(19) Europäisches Patentamt / European Patent Office / Office européen des brevets

(11) **EP 2 595 285 B1**

(12) **EUROPEAN PATENT SPECIFICATION**

(45) Date of publication and mention of the grant of the patent:
**04.05.2016 Bulletin 2016/18**

(51) Int Cl.:
*B62M 6/65* *(2010.01)*     *H02K 21/22* *(2006.01)*
*H02K 7/14* *(2006.01)*     *H02K 1/27* *(2006.01)*

(21) Application number: **12191082.2**

(22) Date of filing: **02.11.2012**

(54) **Wheel for a saddle-ride type electric vehicle, wheel-driving electric motor for a saddle-ride type electric vehicle, and saddle-ride type electric vehicle**

Rad für ein elektrisches Sattelfahrzeug, elektrischer Radantriebsmotor für ein elektrisches Sattelfahrzeug und elektrisches Sattelfahrzeug

Roue pour véhicule électrique à monture de selle, moteur électrique de commande de roue pour véhicule électrique à monture de selle et véhicule électrique à monture de selle

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.11.2011   JP 2011250181**
**15.10.2012   JP 2012227995**

(43) Date of publication of application:
**22.05.2013   Bulletin 2013/21**

(73) Proprietor: **Yamaha Hatsudoki Kabushiki Kaisha Iwata-shi, Shizuoka 438-8501 (JP)**

(72) Inventors:
• **Ishikawa, Hideki
Shizuoka 438-8501 (JP)**
• **Hino, Haruyoshi
Shizuoka 438-8501 (JP)**

(74) Representative: **Zimmermann, Tankred Klaus
Schoppe, Zimmermann, Stöckeler
Zinkler, Schenk & Partner mbB
Patentanwälte
Radlkoferstrasse 2
81373 München (DE)**

(56) References cited:
**DE-A1- 2 727 827          DE-A1- 10 219 332
DE-A1-102005 004 133   JP-A- 2009 284 727
US-A- 6 093 985            US-A1- 2010 052 454
US-B1- 6 492 756**

EP 2 595 285 B1

## Description

## BACKGROUND OF THE INVENTION

### 1. Field of the Invention

The present invention relates to a wheel-driving electric motor for a saddle-ride type electric vehicle, a wheel for a saddle-ride type electric vehicle, and a saddle-ride type electric vehicle.

### 2. Description of the Related Art

A saddle-ride type electric vehicle is a vehicle that travels by means of an electric motor. The saddle-ride type electric vehicle includes a battery as a power source, and its possible travel distance obtained per charging is limited by the capacity of the battery. Therefore, the saddle-ride type electric vehicle is better suited for a short-distance travel than a long-distance travel and, similarly to a bicycle, tends to be used for purposes (such as commuting and shopping) intimately involved in daily lives. Accordingly, in general, a relatively high demand for inexpensiveness and ease of use in daily lives is put on the saddle-ride type electric vehicle.

As a conventional saddle-ride type electric vehicle, there has been a saddle-ride type electric vehicle including an in-wheel motor.

Adoption of the in-wheel motor allows utilization of a dead space that exists inside a driving wheel. This makes it unnecessary to additionally provide a bracket, a casing, or the like, for mounting an electric motor. Thus, the number of parts is reduced, and the price is kept low. Moreover, since the number of parts is reduced, a failure does not often occur and the frequency of maintenance is reduced. Accordingly, from the viewpoint of inexpensiveness and ease of use, the in-wheel motor is suitable for the saddle-ride type electric vehicle.

As a conventional saddle-ride type electric vehicle, there has been a saddle-ride type electric vehicle of direct drive type. The direct drive type is a type that causes rotational force of an electric motor to be transmitted directly to a wheel without interposition of any indirect power transmission mechanism (such as a belt, a chain, a gear, or a speed reducer). Adoption of the direct drive type eliminates the need for the power transmission mechanism. As a result, a mechanical loss that may be caused by the power transmission mechanism is reduced, and moreover the price is kept low. Additionally, since the need for the power transmission mechanism is eliminated, occurrence of a trouble in the power transmission mechanism is not caused, and maintenance of the power transmission mechanism is not required. Accordingly, from the viewpoint of inexpensiveness and ease of use, the direct drive type is suitable for the saddle-ride type electric vehicle.

Furthermore, as a conventional saddle-ride type electric vehicle of direct drive type, there has been a saddle-ride type electric vehicle including an outer rotor electric motor. In the outer rotor electric motor, as compared with an inner rotor electric motor, a rotor can be positioned farther from an axle shaft, which makes it easy to ensure torque. Particularly, in the saddle-ride type electric vehicle, a dead space exists inside the driving wheel. Utilization of the dead space can ensure a long distance between the rotor and the axle shaft, and this can improve the torque. Moreover, in the inner rotor electric motor, a magnet has to be firmly fixed in order to prevent the magnet from falling off due to the centrifugal force, while in the outer rotor electric motor, there is no risk of falling-off of a magnet due to the centrifugal force and thus a structure and specifications for fixing the magnet are simplified. Accordingly, from the viewpoint of inexpensiveness and ease of use, the outer rotor electric motor is suitable for the saddle-ride type electric vehicle.

Japanese Patent Application Laid-Open No. 2002-331986 discloses one of conventional saddle-ride type electric vehicles. The saddle-ride type electric vehicle disclosed in Japanese Patent Application Laid-Open No. 2002-331986 includes an outer rotor in-wheel motor of direct drive type, and a rotor thereof has a rare-earth magnet. Adoption of the direct drive type can reduce a mechanical loss that may be caused by a gear, and adoption of the outer rotor electric motor can ensure torque.

In Japanese Patent Application Laid-Open No. 2002-331986, it is possible to downsize the motor by using the rare-earth magnet. In order to improve workability in mounting a rare-earth magnet with a high maximum energy product to a motor having a small size, a groove for the magnet to fit into is formed in an inner circumferential surface of a yoke.

DE 102 19 332 A1 describes a motor-assisted bicycle which includes a stator installed opposite a rotor core integrated into the hub of the wheel. Several opening sections are formed in the rotor core in such a way that they are open in the axial direction of the wheel and spaced apart at predetermined intervals in the wheel's circumferential direction. A permanent magnet is contained in each of the opening sections, and gaps are located at both ends of the opening section in the wheel's circumferential direction. A commutation pole which forms a part of the rotor core is installed between adjacent opening sections, and a polarity of one of the permanent magnets installed in one of the two adjacent opening sections is different from a polarity of an additional permanent magnet installed in the other of the adjacent opening sections.

## SUMMARY OF THE INVENTION

It is an object of the present invention to provide an improved wheel-driving electric motor for a saddle-ride type electric vehicle, and a saddle-ride type electric vehicle.

This object is achieved by a driving wheel for a saddle-ride type electric vehicle according to claim 1, and a saddle-ride type electric vehicle according to claim 9.

The present invention provides a wheel for a saddle-ride type electric vehicle that is inexpensive and easy to use in daily lives, a wheel-driving electric motor for the saddle-ride type electric vehicle, and the saddle-ride type electric vehicle, with use of an outer rotor in-wheel motor of direct drive type.

Further, the present invention provides a wheel and a wheel-driving electric motor that are suitable for a saddle-ride type electric vehicle and the saddle-ride type electric vehicle, in which, while torque necessary for driving is obtained, both a mechanical loss and an energy loss are reduced and an increased travel distance is obtained from a battery, without losing the productivity.

As for a saddle-ride type vehicle including an engine, in a case where the vehicle is about to run out of gasoline, refueling with gasoline at a gas station enables the vehicle to continue to travel. Refueling with gasoline does not require much time. Therefore, even though a user, at a time of going out, notices that only a small amount of gasoline remains in the vehicle, the user can go out with the vehicle.

As for the saddle-ride type electric vehicle, on the other hand, relatively much time is required for charging a battery. Accordingly, for example, in a case where a user, when going out for an urgent matter, notices that a remaining battery charge of the saddle-ride type electric vehicle is low but there is no time for charging, the user has to abandon going out with the saddle-ride type electric vehicle. Like this, the saddle-ride type electric vehicle may force the user to refrain from the use thereof when the remaining battery charge is low. This is not preferable from the viewpoint of ease of use in daily lives.

In addition, the battery is a consumable. There is a tendency that a possible travel distance obtained per charging decreases as the number of times of charging increases. Moreover, the battery is temperature-sensitive. At a high temperature or a low temperature, the performance of the battery may degrade. Thus, the possible travel distance obtained per charging is not uniform. Here, some saddle-ride type electric vehicles include a display device that displays the remaining battery charge. However, in some cases, the possible travel distance varies depending on a battery state even though the remaining battery charge displayed on the display device is constant. Therefore, it is difficult to accurately predict the possible travel distance based on the remaining battery charge displayed on the display device. Accordingly, in a case of using the saddle-ride type electric vehicle, it is preferable to check that a sufficient battery charge remains before using the saddle-ride type electric vehicle. In other words, it is preferable to always keep the battery charged such that a sufficient battery charge remains therein. However, an increase in the number of times of charging is not preferable from the viewpoint of ease of use in daily lives.

These problems are relieved by providing a longer possible travel distance per charging. If a longer possible travel distance is obtained per charging, the remaining battery charge is less readily reduced. Thus, a situation where the traveling of the saddle-ride type electric vehicle has to be stopped or the use thereof has to be abandoned does not often occur. Besides, when a longer possible travel distance is obtained per charging, a state where a sufficient battery charge remains is maintained for a long time. As a result, the number of times of charging is reduced. Furthermore, the reduction in the number of times of charging can extend the battery life. This is preferable from the viewpoint of ease of use in daily lives.

Therefore, a problem is how to increase the possible travel distance obtained per charging. Increasing the volume of the battery results in an increased battery capacity. However, increasing the volume of the battery also results in an increased price, which does not meet demands of consumers. Additionally, in the saddle-ride type electric vehicle, it is difficult to ensure a space for installation of a large battery.

The present inventors have conducted intensive studies in view of the problems described above, and have found the following.

Based on common knowledge of those skilled in the art, it is preferable that a wheel-driving electric motor of a saddle-ride type electric vehicle has a small size from the viewpoint of installability to a vehicle and travel performance. Therefore, conventionally, those skilled in the art have designed the wheel-driving electric motor based on the assumption that the wheel-driving electric motor should be downsized as much as possible. Japanese Patent Application Laid-Open No. 2002-331986 also aims at downsizing of the motor as well as ensuring of drive torque by using the rare-earth magnet.

The present inventors, however, have changed the way of thinking and deviated from the common knowledge of those skilled in the art, and have found the following characteristic point. That is, in an outer rotor in-wheel motor of direct drive type, a motor is mounted coaxially with an axle shaft at a location inside a tire. Therefore, a radial thickness of a magnet can be increased so long as installation to a vehicle is allowed. Since high travel performance is not required in order to provide a saddle-ride type electric vehicle that is inexpensive and easy to use in daily lives, an increase in the radial thickness of the magnet causes no particular problem.

In this way, the present inventors have found the characteristic point that the saddle-ride type electric vehicle that is inexpensive and easy to use in daily lives allows the thickness of the magnet to increase by taking advantage of the feature of the outer rotor in-wheel motor of direct drive type and thus allows the amount of the magnet to increase.

Consequently, the present inventors have conceived of a possibility of use of a ferrite magnet whose maximum energy product is lower than that of the rare-earth magnet. Adoption of the ferrite magnet allows an energy loss to be kept low while ensuring desired torque, as will be described later.

In general, the ferrite magnet is vulnerable to cracking or chipping. In the outer rotor in-wheel motor of direct drive type, however, there are a large number of poles and therefore the thickness of a magnet is made large relative to the area of the magnet opposed to a stator core, which improves the durability of the ferrite magnet. As a result, the magnet is easily handled during an assembling process and, since the magnet is not vulnerable to cracking or chipping, the productivity is not lost.

In this manner, the present inventors have changed the way of thinking and deviated from the common knowledge of those skilled in the art that "a wheel-driving electric motor having a smaller size is preferable", and instead, have adopted the ferrite magnet under a new idea of "increasing the size of the wheel-driving electric motor". Consequently, the present inventors have discovered that the adoption the ferrite magnet can provide a wheel-driving electric motor in which, while torque necessary for driving is obtained, both a mechanical loss and an energy loss are reduced and an increased travel distance is obtained from a battery, without losing the productivity, causing any physical interference with other component parts, nor causing any disadvantage such as an increase in the size of a vehicle.

The present invention has been made in view of the findings described above, and adopts the following configurations.

(1) A driving wheel of a saddle-ride type electric vehicle, the driving wheel including:

a rim part that supports a tire;
a hub part arranged inside the rim part with respect to a radial direction of the driving wheel, the hub part being configured to rotate on a rotational axis of the driving wheel, wherein an electric motor is provided within the hub part;
a spoke part connecting the rim part to the hub part;
a stator core and a coil provided around the rotational axis of the driving wheel and arranged inside a spoke connection portion of the hub part with respect to the radial direction of the driving wheel, the spoke connection portion being a portion to which the spoke part is connected;
a ferrite magnet arranged inside the spoke connection portion of the hub part and outside the stator core with respect to the radial direction of the driving wheel, the ferrite magnet being opposed to the stator core and configured to rotate together with the hub part, the spoke part, and the rim part on the rotational axis of the driving wheel;
a back yoke part arranged inside the spoke connection portion of the hub part and outside the ferrite magnet with respect to the radial direction of the driving wheel, the back yoke part supporting the ferrite magnet; and
a radius M of the electric motor and a radius R of the rim part with respect to the radial direction of the driving wheel satisfy the expression M > (R - M).

The wheel includes the hub part, the rim part, and the spoke part. The rim part supports the tire. For example, the rim part has a through hole extending through the rim part in the radial direction. A valve of the tire protrudes through the through hole from the outer circumferential side to the inner circumferential side of the rim part. Accordingly, in a saddle-ride type electric vehicle including an outer rotor in-wheel motor of direct drive type, the diameter of the hub part can be increased so long as a space where the valve of the tire protrudes toward the inner circumferential side of the rim part is ensured. Therefore, in the outer rotor in-wheel motor of direct drive type, a large space can be ensured at the inner side of the hub part of the wheel with respect to the radial direction of the wheel. In the wheel of the saddle-ride type electric vehicle according to (1), the stator core and the coil are arranged within the space, and the ferrite magnet is arranged outside the stator core. Accordingly, a relatively large distance is ensured between the ferrite magnet and the rotational axis of the wheel. This can increase the diameter of the ferrite magnet. Thus, in the outer rotor in-wheel motor of direct drive type, torque is improved.

Here, the direct drive type means a type in which a hub part (wheel) rotates together with a rotor (a magnet and a back yoke part). A speed reducer (or a speed increaser) is not interposed between the rotor and the hub part (wheel). An outer rotor electric motor means an electric motor in which a rotor is arranged outside a stator (a stator core and a coil) with respect to a radial direction of a wheel. An in-wheel motor means a motor that is mounted inside a hub part. The in-wheel motor has a stator and a rotor that are mounted inside the hub part with respect to a radial direction of a wheel. In the in-wheel motor, for example, in a plan view of the wheel, each of the stator and the rotor at least partially overlaps the hub part.

However, as described above, in the outer rotor in-wheel motor of direct drive type, when the diameter of the rotor increases, the number of magnets (the number of poles) included in the rotor increases, which results in a higher frequency of switching of the poles (N and S poles of the magnet) in the electric motor. In a case where the frequency of switching of the poles in the electric motor is high, a change of magnetic force occurs frequently. Each time the magnetic force changes, a current occurs in a stator core so as to cancel the change. This current generates Joule heat in the stator core, and heat generation due to the Joule heat causes an energy loss. That is, in the outer rotor in-wheel motor of direct drive type, the frequency is high, so that a change of a magnetic field occurs frequently. As a result, a large energy loss occurs in the outer rotor in-wheel motor of direct drive type. In this respect, the wheel of the saddle-ride type electric vehicle according to (1) has the outer rotor in-wheel motor of direct drive type, in which the ferrite magnet is opposed to the stator core and configured to rotate together with the hub part, the spoke part, and the rim part on the rotational axis of the wheel. Magnetic characteristics of the ferrite magnet are lower than those of a rare-earth magnet such as a neodymium magnet, and a maximum energy product of the ferrite magnet is about 1/10 of that of the rare-earth magnet. Therefore, even when a change of a magnetic field occurs, a large current does not flow in the stator.

Conventionally, a rare-earth magnet, and particularly a neodymium magnet, has been adopted in a wheel-driving electric motor of an electric car, an electric motorcycle, or the like. The neodymium magnet contains a high proportion of iron, and is rust-sensitive. Therefore, for the prevention of rust, the neodymium magnet is plated with nickel, or the like. Here, a plating layer has a low electrical resistance value, and thus, due to a magnetic field generated in the stator, a large current undesirably flows in the plating layer provided on a surface of the magnet. On the other hand, the ferrite magnet having excellent corrosion resistance properties has no plating layer on a surface thereof. Additionally, since the ferrite magnet itself has a high specific resistance, a current flowing in the magnet due to a change of the magnetic field is reduced.

Therefore, the wheel of the saddle-ride type electric vehicle according to (1) allows an energy loss to be kept low while ensuring desired torque with use of the outer rotor in-wheel motor of direct drive type. Accordingly, while torque necessary for driving is obtained, both a mechanical loss and an energy loss are reduced, and an increased travel distance is obtained from a battery, without losing the productivity nor causing any physical interference with other component parts, and with avoidance of an increase in the size of the vehicle, and the like. Thus, a saddle-ride type electric vehicle that is inexpensive and easy to use in daily lives is provided.

Ferrite magnets include strontium ferrite magnets and barium ferrite magnets. Ferrite magnets also include ferrite bond magnets and ferrite plastic magnets.

(2) The driving wheel of the saddle-ride type electric vehicle according to (1), wherein
the ferrite magnet is formed larger than a width of an opposing surface of the stator core which is opposed to the ferrite magnet with respect to an axial direction of the driving wheel, and the ferrite magnet is configured to rotate together with the hub part, the spoke part, and the rim part at a location outside the stator core with respect to the radial direction of the driving wheel.

Normally, the width of a stator core is equal to the width of a magnet of a rotor with respect to an axial direction of a wheel (for example, see FIG. 1 of Japanese Patent Application Laid-Open No. 2002-331986). However, in the wheel of the saddle-ride type electric vehicle according to (2), which has the outer rotor in-wheel motor of direct drive type, there is a relatively sufficient space in the inside of the wheel. This allows the width (height) of the ferrite magnet to increase. As a result, increased magnetic fluxes can pass through the stator core. Additionally, in the outer rotor in-wheel motor of direct drive type, the width of the stator core is smaller than the width of the ferrite magnet. Thus, since the stator core is small, the length of a coil wound on the stator core is shortened accordingly. This can reduce the weight and costs of the wheel-driving electric motor of the saddle-ride type electric vehicle that is the outer rotor in-wheel motor of direct drive type.

(3) The driving wheel of the saddle-ride type electric vehicle according to (2), wherein
the ferrite magnet is formed such that both end edges of the ferrite magnet defining the width thereof are located outside both end edges of the stator core defining the width thereof with respect to the axial direction of the driving wheel, and the ferrite magnet is configured to rotate together with the hub part, the spoke part, and the rim part at a location outside the stator core with respect to the radial direction of the driving wheel.

In the wheel-driving electric motor of the saddle-ride type electric vehicle according to (3), magnetic fluxes flowing from the ferrite magnet are able to efficiently pass through the stator core in the outer rotor in-wheel motor of direct drive type, and therefore torque is efficiently obtained.

(4) The driving wheel of the saddle-ride type electric vehicle according to any one of (1) to (3), wherein the ferrite magnet is supported on the back yoke part such that a center of the ferrite magnet and a center of the stator core are out of alignment with respect to an axial direction of the driving wheel, and the ferrite magnet is configured to rotate together with the hub part, the spoke part, and the rim part at a location outside the stator core with respect to the radial direction of the driving wheel.

In the wheel-driving electric motor of the saddle-ride type electric vehicle according to (4), directions in which the ferrite magnet and the stator core are pulled when the ferrite magnet rotates together with the hub part, the spoke part, and the rim part can be made constant with respect to the axial direction of the wheel, thus preventing a variation of the pulling directions over time. This can stabilize the rotation of the wheel.

(5) The driving wheel of the saddle-ride type electric vehicle according to any one of (1) to (4), wherein the ferrite magnet is formed with a thickness of 4 mm or more, and configured to rotate together with the hub part, the spoke part, and the rim part at a location outside the stator core with respect to the radial direction of the driving wheel.

In (5), magnetic fluxes flowing from the ferrite magnet rotating together with the hub part, the spoke part, and the rim part are able to efficiently pass through the stator core.

Conventionally, in a wheel of a saddle-ride type electric vehicle, a magnet with strong magnetic force has been adopted, in order to achieve thinning of the magnet. However, adoption of the thin magnet with strong magnetic force causes inefficiency because the proportion of the amount of magnetic fluxes not passing through the stator core to the amount of magnetic fluxes flowing from the magnet increases.

In (5), on the other hand, the ferrite magnet has a thickness equal to or greater than 4 mm. Thus, the ferrite magnet is relatively thick. Accordingly, a larger amount of magnetic fluxes flowing from the ferrite magnet reach a portion of the stator core opposed to the ferrite magnet. This enables magnetic fluxes to efficiently pass through the stator core.

The thickness of the ferrite magnet is preferably equal to or greater than 4 mm, more preferably equal to or greater than 5 mm, further preferably equal to or greater than 6 mm, and particularly preferably equal to or greater than 7 mm. The thickness of the ferrite magnet is preferably equal to or less than 15 mm, more preferably equal to or less than 12 mm, further preferably equal to or less than 10 mm, and particularly preferably equal to or less than 9 mm.

Here, the thickness of the ferrite magnet means the value of its thickness in the radial direction of the wheel that is obtained by measuring at the center of the ferrite magnet with respect to a circumferential direction and the axial direction of the wheel. In a case where a plurality of ferrite magnets have different thicknesses, the arithmetic mean value is adopted.

(6) The driving wheel of the saddle-ride type electric vehicle according to any one of (1) to (5), wherein the ferrite magnet is formed with a permeance coefficient Pc that is equal to or higher than 10, and configured to rotate together with the hub part, the spoke part, and the rim part at a location outside the stator core with respect to the radial direction of the driving wheel.

In (6), the ferrite magnet has a permeance coefficient Pc equal to or higher than 10, and a cross-sectional area of the ferrite magnet perpendicular to a magnetization direction (the radial direction of the wheel) is relatively small. In other words, the ferrite magnet is relatively thick. This enables magnetic fluxes flowing from the ferrite magnet rotating together with the hub part, the spoke part, and the rim part to efficiently pass through the stator core.

(7) The driving wheel of the saddle-ride type electric vehicle according to any one of (1) to (6), wherein the ferrite magnet is formed such that an outer surface thereof with respect to the radial direction of the driving wheel has a shape following an inner surface of the back yoke part, and the ferrite magnet is configured to, while the outer surface of the ferrite magnet is supported on the inner surface of the back yoke part, rotate together with the hub part, the spoke part, and the rim part at a location outside the stator core with respect to the radial direction of the driving wheel.

In the wheel-driving electric motor of the saddle-ride type electric vehicle according to (7), the outer surface of the ferrite magnet is able to be in close contact with the inner surface of the back yoke part. This enables the functions as the back yoke to be efficiently exhibited. Thus, torque is improved.

(8) The driving wheel of the saddle-ride type electric vehicle according to any one of (1) to (7), wherein the ferrite magnet is supported on the back yoke part such that the number of magnetic poles in a ferrite magnet rotating together with the hub part, the spoke part, and the rim part at a location outside the stator core with respect to the radial direction of the driving wheel is thirty or more and fifty-four or less.

In the wheel of the saddle-ride type electric vehicle according to (8), there are a large number of magnetic poles. Accordingly, the ratio of the thickness of the ferrite magnet to the area of the ferrite magnet opposed to the stator core can be made greater than the ratio of the thickness of a rare-earth magnet to the area of the rare-earth magnet in a conventional wheel-driving electric motor. As a result, the durability of the ferrite magnet is improved. Therefore, the ferrite magnet is easy to manufacture, and the productivity is not lost. The number of poles and the number of magnet pieces may not necessarily be equal to each other.

(9) A saddle-ride type electric vehicle, the saddle-ride type electric vehicle including
the wheel according to any one of (1) to (8).

The saddle-ride type electric vehicle according to (9) allows an energy loss to be kept low while ensuring desired torque with use of the outer rotor in-wheel motor of direct drive type. Thus, a saddle-ride type electric vehicle that is inexpensive and easy to use in daily lives is provided.

In the present invention, a wheel-driving electric motor of a saddle-ride type electric vehicle that is inexpensive and easy to use in daily lives, a wheel of the saddle-ride type electric vehicle, and the saddle-ride type electric vehicle, can be provided with use of the outer rotor in-wheel motor of direct drive type. More specifically, there can be provided a wheel and a wheel-driving electric motor that are suitable for a saddle-ride type electric vehicle and the saddle-ride type electric vehicle, in which, while torque necessary for driving is obtained, both a mechanical loss and an energy loss are reduced and an increased travel distance is obtained from a battery, without losing the productivity.

These and other objects, features, aspects and advantages of the present invention will become apparent to those skilled in the art from the following detailed description, which, taken in conjunction with the accompanying drawings, discloses a preferred embodiment of the present invention.

## BRIEF DESCRIPTION OF THE DRAWINGS

FIG. 1 is a side view schematically showing an electric motorcycle according to a preferred embodiment of the present invention;

FIG. 2 is a left side view schematically showing a wheel of the electric motorcycle shown in FIG. 1;

FIG. 3 is a right side view of the wheel shown in FIG. 2;

FIG. 4A is a left side view schematically showing a wheel-driving electric motor of an electric motorcycle according to a preferred embodiment of the present invention;

FIG. 4B is a left side view schematically showing a wheel-driving electric motor of an electric motorcycle according to a comparative example;

FIG. 5A shows a part of FIG. 4A on an enlarged scale;

FIG. 5B shows a part of FIG. 4B on an enlarged scale;

FIG. 6A shows a cross section of FIG. 5A;

FIG. 6B shows a cross section of FIG. 5B; and

FIG. 7 is a cross-sectional view schematically showing the wheel of the electric motorcycle shown in FIG. 1.

## DESCRIPTION OF THE PREFERRED EMBODIMENTS

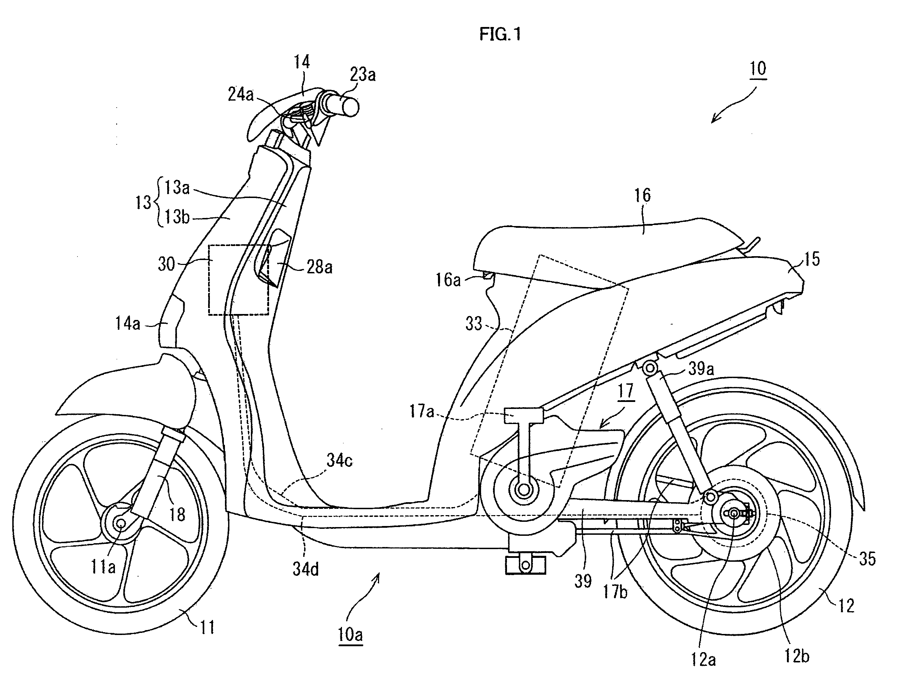

Hereinafter, an electric motorcycle 10 according to a preferred embodiment of the present invention will be described with reference to the accompanying drawings. FIG. 1 is a side view schematically showing the electric motorcycle 10 according to the preferred embodiment of the present invention. The electric motorcycle is one example of a saddle-ride type electric vehicle. The saddle-ride type electric vehicle is a saddle-ride type vehicle that is electrically driven. Examples of the saddle-ride type vehicle include a two-wheeled vehicle, a three-wheeled vehicle, and a vehicle for off-road use (ALL-TERRAIN VEHICLE). Examples of the two-wheeled vehicle include a scooter, a moped, and a sport type two-wheeled vehicle.

The electric motorcycle 10 includes a pair of wheels composed of a front wheel 11 and a rear wheel 12, and a vehicle body 10a having the pair of wheels attached thereto. The electric motorcycle 10 is configured to travel at a relatively low speed (for example, 20 Km/h or less). A handlebar 14 is attached above a front cover unit 13 that constitutes a front part of the vehicle body 10a. A light 14a is provided at the center of an upper area of a front surface of the front cover unit 13. A seat 16 is provided on an upper surface of a rear cover unit 15 that constitutes a rear part of the vehicle body 10a. A pedal unit 17 by which a rider inputs driving force is provided in the vehicle body 10a at a location below the front side of the rear cover unit 15. The diameter of the wheel, though not particularly limited, is 10 to 16 inches, for example.

The front wheel 11 is rotatably supported on a lower end portion of a front fork 18 whose lower part is bifurcated. More specifically, two lower end portions of the front fork 18 rotatably support both side portions of a center shaft 11a of the front wheel 11, thereby allowing the front wheel 11 to rotate on the center shaft 11a. Further, a head pipe (not shown) is provided at a top end portion of the front fork 18. The head pipe is coupled to a front end portion of a down tube (not shown) that constitutes a main body part of the vehicle body 10a.

A steering shaft (not shown) is mounted inside the head pipe such that the steering shaft is axially rotatable. A lower end portion of the steering shaft is coupled to a central portion of the top end of the front fork 18. An upper portion of the steering shaft protrudes upward from a top end portion of the head pipe, and the handlebar 14 is coupled to a top end portion of the steering shaft. Grips 23a are provided at the right and left ends of the handlebar 14, respectively. Brake levers 24a serving to restrain rotation of the front wheel 11 or the rear wheel 12 are disposed near the grips 23a, respectively.

The front cover unit 13 includes a rear surface covering part 13a that defines a rear surface and a front surface covering part 13b that defines a front surface. A controller 30 is arranged in the front cover unit 13. The controller 30 is a device that electrically controls a drive system, and the like, provided in the electric motorcycle 10. A display unit (not shown) is provided in a recess 28a. The display unit displays a charge state of a battery 33, and the like. In the drawing, the reference numeral 34c denotes a lead connecting the controller 30 and the battery 33 to each other, and the reference numeral 34d denotes a lead connecting the controller 30 and an electric motor 35 to each other.

A rear portion of the down tube, whose front end portion is coupled to the head pipe, extends obliquely downward from the portion coupled to the head pipe to the rear, and then curves to extend horizontally. A pair of rear frames (not shown) are coupled to a rear end portion of the down tube. The pair of rear frames extend obliquely upward to the rear within the rear cover unit 15. The pair of rear frames are arranged with a predetermined space therebetween, and their rear end portions are coupled to each other. The battery 33 is mounted between the rear frames.

Moreover, a rear arm 39 is coupled to the rear end portion of the down tube via a coupling member (not shown). The rear arm 39 has a pair of parallel arm members whose front end portions are coupled to each other. The rear arm 39 extends rearward. Rear end portions of the arm members of the rear arm 39 respectively support both side portions of a center shaft 12a of the rear wheel 12. Thus, the rear wheel 12 is rotatable on the center shaft 12a. A rear cushion 39a is bridged between an upper portion of the rear end of the rear arm 39 and a substantially central portion of the rear frame. Expansion and contraction of the rear cushion 39a allow a rear end portion of the rear arm 39 to swing.

A cover 12b is provided in a central portion of the rear wheel 12. The electric motor 35 and a drum brake (not shown) are placed within the cover 12b. The electric motor 35 is activated under control by the controller 30, to generate driving force in the rear wheel 12. Upon an operation of the brake levers 24a, the activation of the electric motor 35 is stopped under control by the controller 30.

A chain 17b runs between a gear unit (not shown) provided in the pedal unit 17 and a gear unit provided in the rear wheel 12. When the rider turns pedals 17a with his/her feet, driving force caused by human power is transmitted from the pedal unit 17 to the rear wheel 12 through the chain 17b. Furthermore, a brake (not shown) is also provided in the front wheel 11. This brake and the drum brake of the rear wheel 12 are activated to brake the associated front wheel 11 and the rear wheel 12, respectively, in accordance with the amount of operation of the brake levers 24a.

A bottom of the front end of the seat 16, which is provided on the upper surface of the rear cover unit 15, is pivotable with a hinge coupling 16a. In the interior of the rear cover unit 15, a storage part for placing the battery 33 and a storage part for placing a helmet and the like are provided. Accordingly, when the seat 16 is pivoted on the hinge coupling 16a, the upper surface of the rear cover unit 15 is opened. Through this opening, the battery 33, the helmet, and the like, can be taken in and out, and charging of the battery 33 can be performed. The electric motorcycle 10 also has a rotary stand (not shown) for keeping the electric motorcycle 10 upright when at rest. The rear portion of the down tube and the pedal unit 17 are covered with a covering member.

In a case of using the electric motorcycle 10 as a bicycle when, for example, traveling on a level or downhill road, the rider turns the pedals 17a with his/her feet to thereby generate the driving force in the rear wheel 12. To reduce the traveling speed of the electric motorcycle 10, the rider operates the brake levers 24a as appropriate. Thereby, the electric motorcycle 10 decelerates in accordance with the amount of operation of the brake levers 24a.

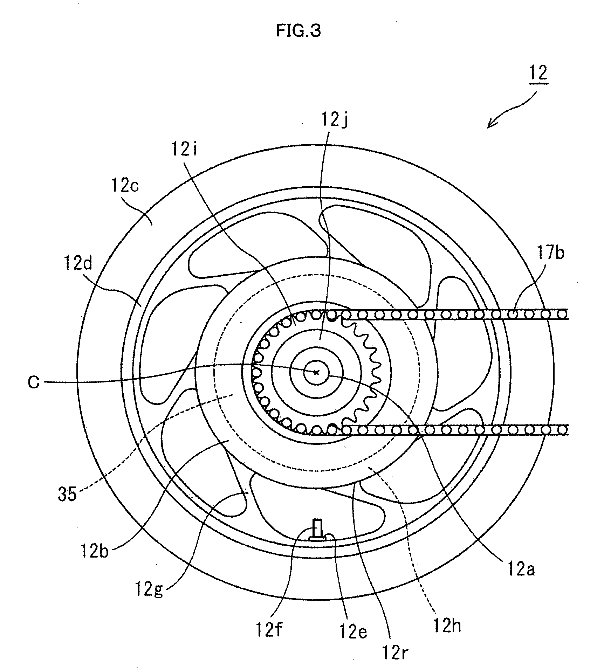

In a case of traveling with the electric motorcycle 10 while generating the driving force by the electric motor 35 when, for example, traveling on an uphill road, the rider operates the grips 23a in accordance with a desired speed to which the traveling speed should be increased. In this case, when the rider keeps his/her feet rested on the pedals 17a without turning the pedals 17a, a one-way clutch 12j (see FIG. 3) provided at the rear wheel 12 side is activated to prevent the rotation of the electric motor 35 from being transmitted to the pedals 17a through the chain 17b. However, it is also possible for the rider to continue to turn the pedals 17a with his/her feet. This enables the electric motorcycle 10 to travel at a high speed with small force given by the rider.

To reduce the traveling speed of the electric motorcycle 10, the rider operates the brake levers 24a to stop the activation of the electric motor 35 under control by the controller 30, and then further continues to operate the brake levers 24a, thereby decelerating the electric motorcycle 10 in accordance with the amount of operation of the brake levers 24a.

If the charge amount of the battery 33 displayed on the display unit has been reduced, a charge cord (not shown) is connected to the battery 33, thereby charging the battery 33. For this charging, the seat 16 is pivoted so that the upper surface of the rear cover unit 15 is opened, and the battery 33 is connected to a power source by using the charge cord. During the charging, the seat 16 is let down so that the upper surface of the rear cover unit 15 is closed. In this state, the charge cord extends to the outside through a gap between the rear cover unit 15 and the seat 16.

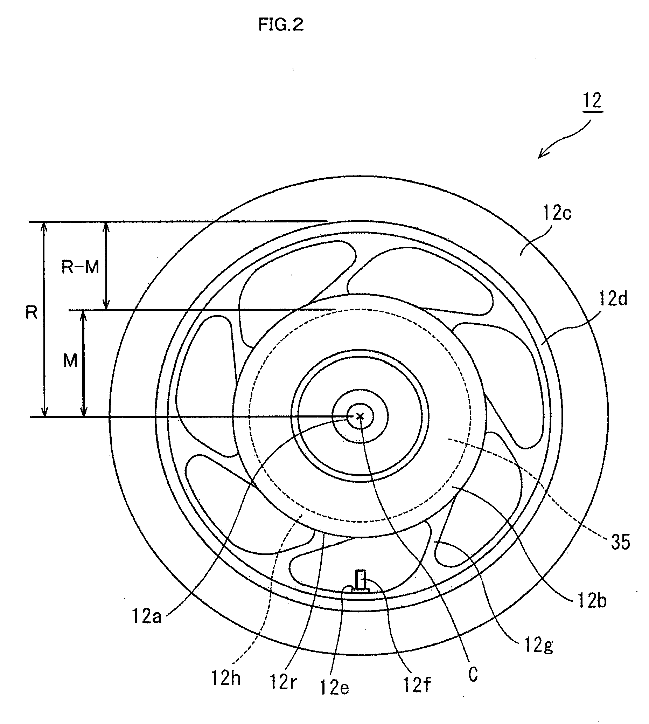

FIG. 2 is a left side view schematically showing the rear wheel 12 of the electric motorcycle 10 shown in FIG. 1.

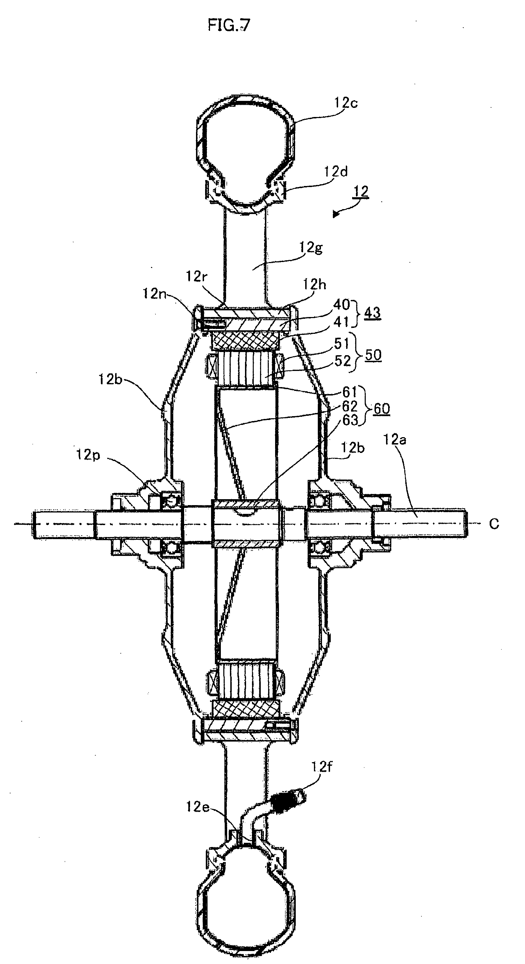

The rear wheel 12 includes the center shaft 12a. The center of the center shaft 12a is a rotational axis C of the rear wheel 12. The center shaft 12a is supported on the rear arm 39 (see FIG. 1). The cover 12b is rotatably supported on the center shaft 12a via a bearing 12p (see FIG. 7). The cover 12b has a circular shape when seen along an axial direction of the rear wheel 12. A hub part 12h is attached to an outer circumferential portion of the cover 12b at the inner side. The hub part 12h has a cylindrical shape, and has an opening that extends through the rear wheel 12 in the axial direction. In other words, the cover 12b covers the opening of the hub part 12h having the cylindrical shape. The electric motor 35 is mounted inside the hub part 12h with respect to a radial direction of the rear wheel 12. In other words, the electric motor 35 is provided within the hub part 12h. Details of the electric motor 35 will be described later. In this preferred embodiment, the center shaft 12a does not rotate but the cover 12b and the hub part 12h rotate together.

A rim part 12d is positioned at the outer circumferential side of the hub part 12h with respect to the radial direction of the rear wheel 12. The rim part 12d has an annular shape when seen along the axial direction of the rear wheel 12. The diameter of the rim part 12d is greater than the diameter of the hub part 12h. The hub part 12h and the rim part 12d are connected to each other by a spoke part 12g. The spoke part 12g is connected to a spoke connection portion 12r of the hub part 12h. The spoke connection portion 12r is positioned at an outer surface of the hub part 12h with respect to the radial direction of the rear wheel 12. The spoke connection portion 12r may be positioned at both of right and left side surfaces of the hub part 12h, or may be positioned at one of the side surfaces. The hub part 12h, the rim part 12d, and the spoke part 12g are formed as a single piece made of a non-magnetic material, which, in this preferred embodiment, is a member made of aluminum. However, the material of the member including the hub part 12h, the rim part 12d, and the spoke part 12g is not limited to aluminum, as long as it is a non-magnetic material. For example, the member may be made of magnesium or a reinforced resin. A method for forming the hub part 12h, the rim part 12d, and the spoke part 12g is not particularly limited. For example, casting such as low-pressure casting, forging, or the like, is adoptable to form the hub part 12h, the rim part 12d, and the spoke part 12g as a single piece. It may be also acceptable that the hub part 12h, the rim part 12d, and the spoke part 12g are separate members, and the hub part 12h, the rim part 12d, and the spoke part 12g are assembled. A tire 12c is mounted at the outer circumferential side of the rim part 12d with respect to the radial direction of the rear wheel 12. The rim part 12d supports the tire 12c. The rim part 12d has a through hole 12e extending through the rim part 12d in the radial direction of the rear wheel 12. A valve 12f of the tire 12c protrudes through the through hole 12e from the outer circumferential side to the inner circumferential side of the rim part 12d (see FIG. 7). A radius M of the electric motor 35 and a radius R of the rim part 12d with respect to the radial direction of the rear wheel 12 satisfy the following Expression (1). In the electric motorcycle 10 of this preferred embodiment, the outer rotor electric motor 35 having a large diameter is mounted, and a dead space existing radially inside the rear wheel 12 is utilized. Thus, the radius M of the electric motor 35 is relatively large. The relationship between the radius M of the electric motor 35 and the radius R of the rim part 12d is not limited to the relationship represented by the following Expression (1). For example, in a case where the radius R of the rim part 12d is relatively large, the following Expression (1) may not be satisfied.

$$M > (R{-}M) \qquad \dots (1)$$

In this preferred embodiment, a plurality of spoke parts 12g, which extend radially outward from the rotational axis C side, are provided between the hub part 12h and the rim part 12d. However, instead of the plurality of spoke parts 12g, a spoke part having a disk-like shape (so-called disk spoke part) may be provided.

FIG. 3 is a right side view of the wheel shown in FIG. 2.

The one-way clutch 12j is supported on the center shaft 12a of the rear wheel 12 via a bearing (not shown). The cover 12b and a sprocket 12i are provided outside the one-way clutch 12j with respect to the radial direction of the rear wheel 12. The cover 12b covers the opening of the hub part 12h. The electric motor 35 is mounted inside the hub part 12h with respect to the radial direction of the rear wheel 12. The sprocket 12i is located outside the cover 12b with respect to the axial direction of the rear wheel 12. The cover 12b, the hub part 12h, and the sprocket 12i are configured to rotate together. A chain 17b is wound on the sprocket 12i.

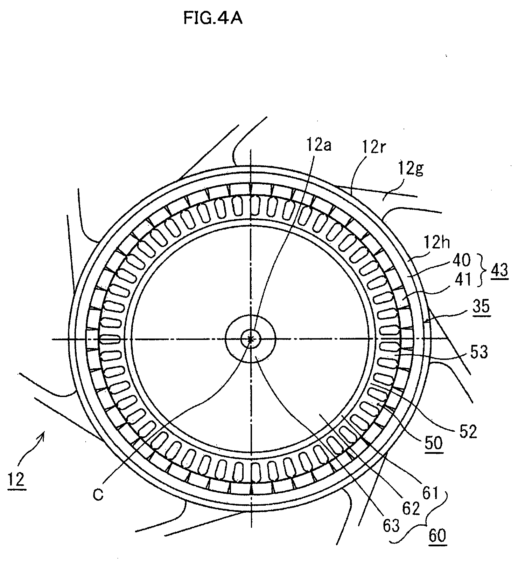

Next, a wheel-driving electric motor of the electric motorcycle according to this preferred embodiment will be described in detail with reference to FIGS. 4A to 6B.

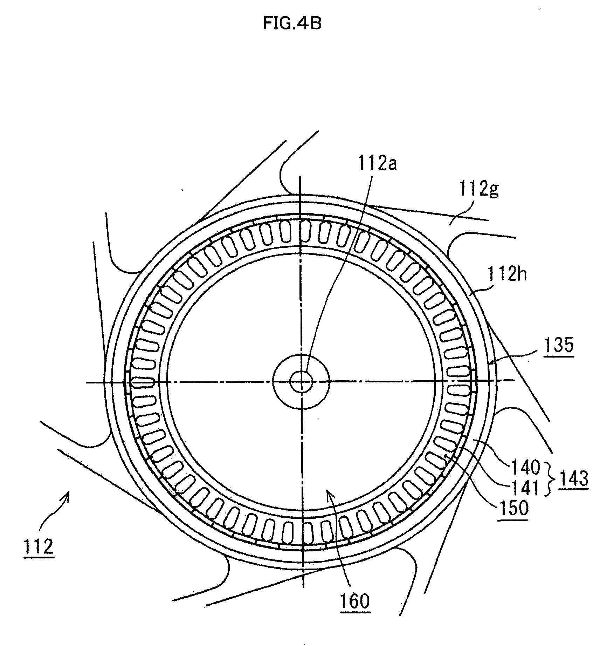

FIG. 4A is a side view schematically showing a wheel-driving electric motor of an electric motorcycle according to a preferred embodiment of the present invention. FIG. 4B is a side view schematically showing a wheel-driving electric motor of an electric motorcycle according to a comparative example. FIG. 4A shows a side view of the electric motor 35 in a state where the cover 12b is removed.

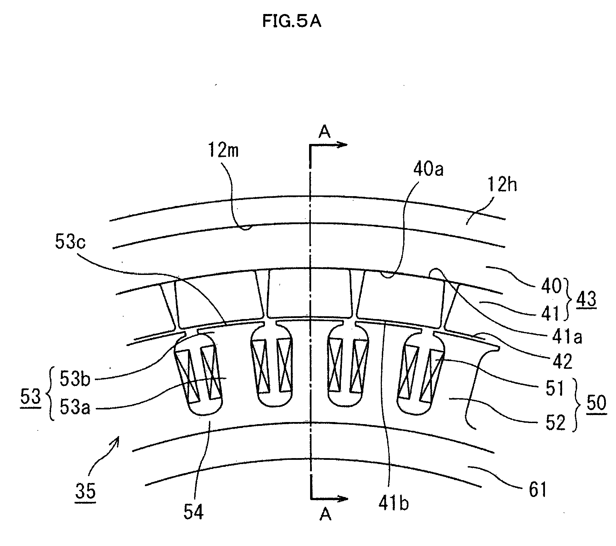

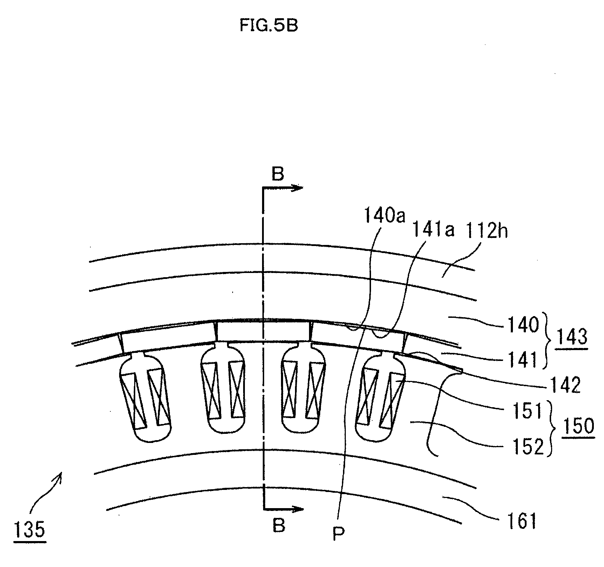

FIG. 5A shows a part of FIG. 4A on an enlarged scale. FIG. 5B shows a part of FIG. 4B on an enlarged scale. In FIGS. 5A and 5B, a direction parallel with the lines A-A and B-B corresponds to the radial direction of the rear wheel 12, a direction parallel with a straight line that connects the near side to the far side with respect to the viewer of FIGS. 5A and 5B corresponds to the axial direction of the rear wheel 12, and a direction in which an arc defined by the hub part 12h extends corresponds to a circumferential direction of the rear wheel 12.

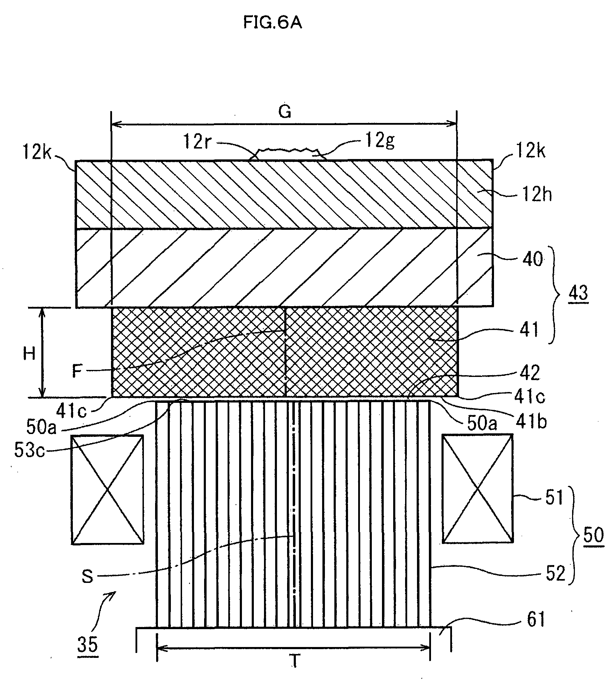

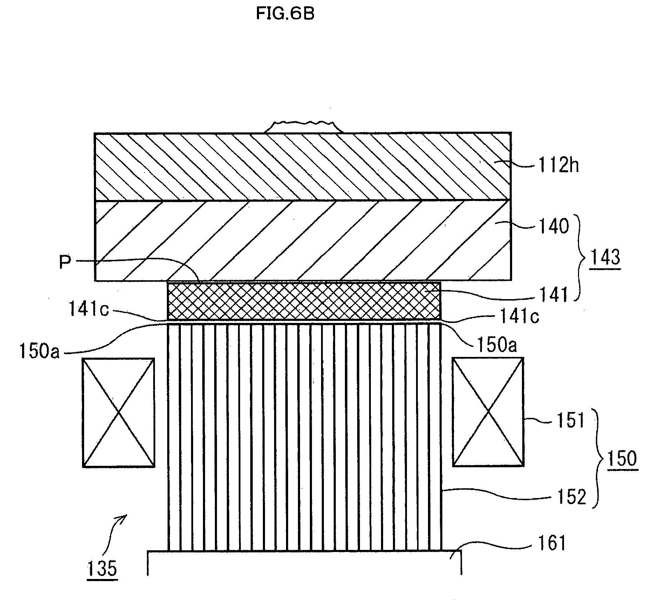

FIG. 6A shows a cross section taken along the line A-A of FIG. 5A. FIG. 6B shows a cross section taken along the line B-B of FIG. 5B. The vertical direction and the horizontal direction of FIGS. 6A and 6B correspond to the radial direction and the axial direction of the rear wheel 12, respectively.

In FIGS. 4A to 6B, the electric motor according to this preferred embodiment and an exemplary electric motor according to the comparative example are shown in juxtaposition for clearly showing differences therebetween. FIGS. 4A, 5A, and 6A show the electric motor according to this preferred embodiment. FIGS. 4B, 5B, and 6B show an exemplary electric motor according to the comparative example. This comparative example is to be compared with the example that adopts the ferrite magnet, in terms of the size of the magnet and the size of the electric motor. In the comparative example, the same stator as that of the example is used, and a rare-earth magnet is adopted as the magnet.

Firstly, the electric motor 35 according to this preferred embodiment will be described with reference to FIGS. 4A, 5A, and 6A.

The electric motor 35 according to this preferred embodiment is an outer rotor in-wheel motor of direct drive type. As shown in FIG. 4A, the electric motor 35 includes a rotor 43 and a stator 50. The rotor 43 includes ferrite magnets 41. The rotor 43 also includes a back yoke part 40.

The electric motor 35 is an in-wheel motor, and provided inside the hub part 12h with respect to the radial direction of the rear wheel 12. In other words, the rotor 43 (the ferrite magnets 41 and the back yoke part 40) and the stator 50 (a stator core 52 and a coil 51) are provided inside the hub part 12h with respect to the radial direction of the rear wheel 12. The electric motor 35 is an outer rotor electric motor, and the rotor 43 (the ferrite magnets 41 and the back yoke part 40) is located outside the stator 50 (the stator core 52 and the coil 51) with respect to the radial direction of the rear wheel 12. The electric motor 35 also includes a support member 60.

The support member 60 is fixed to the center shaft 12a, and supports the stator core 52. The stator core 52 is fixed to the support member 60. The stator core 52 does not rotate relative to the support member 60 and the center shaft 12a. Although a case where the electric motor 35 includes the support member 60 is described in this preferred embodiment, the present invention is not limited to this example. It is also acceptable that the electric motor 35 does not include the support member 60. In such a case, the electric motor 35 and the support member 60 are assembled into the electric motorcycle 10 during manufacturing of the electric motorcycle 10.

The support member 60 is a member made of iron formed as a single piece, and includes an outer cylindrical part 61, a coupling part 62, and an inner cylindrical part 63.

The outer cylindrical part 61 has a cylindrical shape with an opening extending therethrough in the axial direction of the rear wheel 12. The stator core 52 is provided at an outer periphery of the outer cylindrical part 61 with respect to the radial direction of the rear wheel 12.

The inner cylindrical part 63 has a cylindrical shape with an opening extending therethrough in the axial direction of the rear wheel 12. The center shaft 12a is passed through the opening of the inner cylindrical part 63, and the inner cylindrical part 63 is fixed to the center shaft 12a. Thereby, the support member 60 is fixed to the center shaft 12a.

The coupling part 62 is provided between the outer cylindrical part 61 and the inner cylindrical part 63. The coupling part 62 has an annular shape in a side view. In this preferred embodiment, the support member 60 has a disk-like shape. However, it may be also possible that the support member 60 has a through hole extending therethrough in the axial direction of the rear wheel 12 or has a rib extending in the radial direction of the rear wheel 12. The coupling part 62 may be configured as a plurality of spoke parts (solid spokes) that couple the outer cylindrical part 61 and the inner cylindrical part 63 to each other.

The stator core 52 is provided outside the support member 60 with respect to the radial direction of the rear wheel 12, and fixed to the support member 60. The stator 50 includes the stator core 52 having an annular shape, and the coils 51 (see FIG. 5A).

The stator core 52 is formed in the following manner. Firstly, a strip-like member is stamped out from an iron plate. In the strip-like member, a plurality of projections are arranged at intervals at one longitudinal side, while no projection is formed at the other longitudinal side. Then, the strip-like member is rolled so as to form an annular shape, and under this state the strip-like members are stacked. More specifically, at this time, the strip-like members are stacked in an axial direction of the annular shape while the strip-like member is rolled with one side and the other side thereof being located outward and inward, respectively, with respect to the radial direction of the annular shape. Thereby, the stator core 52 having an annular shape is formed. A method for forming the stator core is not particularly limited. The stator core may be formed by, for example, stacking annular iron plates having projections at the outer diameter side thereof. A material of the stator core is not particularly limited, as long as the material can develop functions as the stator core (that is, a magnetic material). For example, a magnetic steel plate may be adopted.

In the stator core 52, the plurality of projections overlap each other in the axial direction of the annular shape, and the overlapping projections form teeth 53. Thus, the stator core 52 has a plurality of teeth 53. In this preferred embodiment, fifty-one teeth 53 are provided. The plurality of teeth 53 are located in an outer portion of the stator core 52 with respect to the radial direction of the rear wheel 12. The plurality of teeth 53 are arranged at intervals along the circumferential direction of the rear wheel 12. Each of the teeth 53 protrudes in the radial direction of the rear wheel 12. Each of the teeth 53 is opposed to the ferrite magnet 41. There is a gap between each of the teeth 53 and the ferrite magnet 41. The coil 51 (not shown in FIG. 4) is wound on each of the teeth 53. For example, a copper wire is adopted for the coil 51. In this preferred embodiment, the number of teeth 53 is a multiple of three. The coil 51 is wound on each of the teeth 53 in such a manner that the teeth 53 are arranged in the order of U-phase (positive), U-phase (negative), U-phase (positive), V-phase (positive), V-phase (negative), V-phase (positive), V-phase (negative), W-phase (negative), W-phase (positive), W-phase (negative), U-phase (negative), .... Here, the terms "positive" and "negative" indicate directions of winding of the coil 51. A manner of winding the coil 51 on each of the teeth 53 is not limited to this example. It may be also acceptable that, for example, the coil 51 is wound on each of the teeth 53 in such a manner that three adjacent teeth make one set including the three phases, namely, U-phase, V-phase, and W-phase.

The rotor 43 includes the back yoke part 40 and the ferrite magnets 41.

The back yoke part 40 is a magnetic material (for example, a member made of iron) having a cylindrical shape. The back yoke part 40 has an opening extending therethrough in the axial direction of the rear wheel 12. The back yoke part 40 is not limited to the member made of iron, and it suffices that the back yoke part 40 is made of a magnetic material. For example, the back yoke part 40 may be made of a magnetic steel. The back yoke part 40 is provided inside the hub part 12h with respect to the radial direction of the rear wheel 12. The back yoke part 40 is formed integrally with the hub part 12h by, for example, casting. That is, the hub part 12h, the rim part 12d, the spoke part 12g, and the back yoke part 40 are integrally formed. The back yoke part 40 rotates together with the hub part 12h on the rotational axis C of the rear wheel 12. A groove for the ferrite magnets 41 to fit into is not formed in an inner circumferential surface of the back yoke part 40 with respect to the radial direction of the rear wheel 12. In a side view of the rear wheel 12 (FIGS. 4A and 5A), an inner circumference of the back yoke part 40 has an annular shape.

The rotor 43 includes a plurality of ferrite magnets 41 each having a pair of poles, an N pole and an S pole. In this preferred embodiment, the ferrite magnets 41 are supported on the back yoke part 40. The ferrite magnets 41 are fixed to the back yoke part 40 with an adhesive (not shown). In this preferred embodiment, the number of the ferrite magnets 41 is forty-six, which is smaller than the number of the teeth 53. Thus, the number of magnetic poles in the ferrite magnets 41 is forty-six. In other words, the number of poles in the electric motor 35 is forty-six. The number of magnetic poles in the ferrite magnets (the number of poles in the electric motor) of the present invention is, though not particularly limited, preferably thirty or more and fifty-four or less. It is not essential that the number of poles is coincident with the number of magnet pieces. The plurality of ferrite magnets 41 are supported at the inner side of the back yoke part 40 with respect to the radial direction of the rear wheel 12. Since a groove for the ferrite magnets 41 to fit into is not formed at the inner side of the back yoke part 40, the back yoke part 40 does not enter a space between side surfaces of the neighboring ferrite magnets 41. The plurality of ferrite magnets 41 are arranged at intervals along the circumferential direction of the rear wheel 12 in such a manner that the N pole and the S pole alternately appear. Here, an operation of an electric motor that includes a plurality of teeth having U-phase, V-phase, and W-phase to which a three-phase alternating current is applied and that also includes a plurality of magnets each having a pair of poles of an N pole and an S pole, has been conventionally known. Therefore, a description thereof is omitted.

As shown in FIG. 5A, the stator core 52, the ferrite magnets 41, and the back yoke part 40 arranged in the mentioned order from the inner side with respect to the radial direction of the rear wheel 12, are provided between the hub part 12h and the outer cylindrical part 61 included in the support member 60. The stator core 52 is supported on the outer cylindrical part 61. The ferrite magnets 41 are supported on the back yoke part 40. The back yoke part 40 is arranged outside the stator 50 with respect to the radial direction of the rear wheel 12, and provided to the hub part 12h.

The stator core 52 of the stator 50 includes a base 54 having an annular shape and the plurality of teeth 53. The base 54 is located inside with respect to the radial direction of the rear wheel 12. The plurality of teeth 53 protrude outward from the base 54 with respect to the radial direction of the rear wheel 12. The base 54 functions as a yoke for preventing leakage of magnetic force. Each of the teeth 53 includes an inner portion 53a located inside with respect to the radial direction of the rear wheel 12 and an outer portion 53b located outside with respect to the radial direction of the rear wheel 12.

The coil 51 is wound around the inner portion 53a. The coil 51 is formed of a bundle of a plurality of copper wires (for example, six to eight copper wires) being wound on the inner portion 53a a plurality of times (for example, six to eleven times).

As shown in FIG. 5A, the width of the outer portion 53b is larger at a location farther from the inner portion 53a and closer to the rotor 43 (ferrite magnets 41). The outer portion 53b has an opposing surface 53c opposed to an inner surface 41b of the ferrite magnet 41. A gap 42 is provided between the inner surface 41b of the ferrite magnet 41 and the opposing surface 53c of the outer portion 53b. In this preferred embodiment, the inner surface 41b of the ferrite magnet 41 has a width larger than that of the opposing surface 53c of the outer portion 53b. Since the opposing surface 53c has a large width, magnetic fluxes flowing from the ferrite magnet 41 is able to efficiently pass through the stator core 52. In a case where a rare-earth magnet is adopted as in the electric motor according to the comparative example, there is a possibility that magnetic fluxes flowing from the rare-earth magnet cannot be sufficiently collected to the stator core even though a large opposing surface is provided, because the magnetic fluxes of the rare-earth magnet are too many.

The ferrite magnet 41 has, instead of a flat plate shape, a curved plate shape curved along the circumferential direction of the rear wheel 12. Accordingly, an outer surface 41a and the inner surface 41b of the ferrite magnet 41 are curved along the circumferential direction of the rear wheel 12. That is, the outer surface 41a of the ferrite magnet 41 has a shape following an inner surface 40a of the back yoke part 40. In other words, the inner surface 40a of the back yoke part 40 has a concave shape recessing outward with respect to the radial direction of the rear wheel 12, and the outer surface 41a of the ferrite magnet 41 has a convex shape bulging outward with respect to the radial direction of the rear wheel 12. The ferrite magnet 41 is fixed to the back yoke part 40 with the adhesive (not shown). Since the outer surface 41a of the ferrite magnet 41 has a shape following the inner surface 40a of the back yoke part 40, no gap occurs between the ferrite magnet 41 and the back yoke part 40. This enables the back yoke part 40 to efficiently exhibit the functions as a yoke, so that the magnetic fluxes flowing from the ferrite magnet 41 efficiently pass through the stator core 52.

The electric motor 35 is an electric motor of direct drive type, in which the ferrite magnets 41 are supported on the back yoke part 40 and the back yoke part 40 is integrated with the hub part 12h. During the activation of the electric motor 35, the relative positional relationship between the ferrite magnets 41 and the hub part 12h is not changed. In other words, the ferrite magnets 41 are fixed to the hub part 12h with interposition of the back yoke part 40 therebetween. That is, the ferrite magnets 41 are fixed to the hub part 12h without interposition of any indirect power transmission mechanism (such as a belt, a chain, a gear, or a speed reducer). Since no indirect power transmission mechanism is interposed, a high efficiency of energy transmission to the hub part 12h is obtained. The ferrite magnets 41 rotate together with the hub part 12h, the spoke part 12g, and the rim part 12d, at a location outside the stator core 52 with respect to the radial direction of the rear wheel 12. That is, during the activation of the electric motor 35, the number of rotations of the ferrite magnets 41 is equal to the number of rotations of the hub part 12h, the spoke part 12g, and the rim part 12d.

The outer surface 41a of the ferrite magnet 41 has a shape following an inner surface 12m of the hub part 12h, and the outer surface 41a of the ferrite magnet 41 is fixed to the inner surface 12m of the hub part 12h with interposition of the back yoke part 40 therebetween. The ferrite magnet 41 is fixed to the hub part 12h with interposition of the back yoke part 40 therebetween in such a manner that there is no gap between the outer surface 41a of the ferrite magnet 41 and the inner surface 12m of the hub part 12h. The ferrite magnet 41 rotates together with the hub part 12h, the spoke part 12g, and the rim part 12d.

As shown in FIG. 6A, the electric motor 35 is an in-wheel motor, in which the stator 50 and the rotor 43 are arranged inside the hub part 12h with respect to the radial direction of the rear wheel 12, and each of the stator core 52, the ferrite magnet 41, and the back yoke part 40 at least partially overlaps the hub part 12h in a plan view of the rear wheel 12. As shown in FIG. 6A, a center F of the ferrite magnet 41 and a center S of the stator core 52 are out of alignment with respect to the axial direction of the rear wheel 12. Accordingly, directions in which the ferrite magnet 41 and the stator core 52 are pulled are made constant with respect to the axial direction of the rear wheel 12, thus preventing a variation of the pulling directions over time. This can stabilize the rotation of the rear wheel 12. Here, for the contrast between the center F of the ferrite magnet 41 and the center S of the stator core 52, the center F on the inner surface 41b of the ferrite magnet 41 and the center S on the opposing surface 53c of the stator core 52 are used. As shown in FIG. 6A, the stator core 52 is a stack of iron plates, in which a plurality of iron plates are stacked in the axial direction of the rear wheel 12.

With respect to the axial direction of the rear wheel 12, a width T of the stator core 52 is 23 mm and a width G of the ferrite magnet 41 is 29 mm. That is, the width T of the stator core 52 is smaller than the width G of the ferrite magnet 41. In an outer rotor in-wheel motor of direct drive type, there is a relatively sufficient space in the inside of the rear wheel 12, which allows the width of the ferrite magnet 41 to increase. As a result, increased magnetic fluxes can pass through the stator core 52. Additionally, the size of the stator core 52 can be reduced, and the length of the coil 51 wound on the stator core 52 can be shortened. This can reduce the weight and costs of the electric motor 35.

The ferrite magnet 41 is supported on the hub part 12h with interposition of the back yoke part 40 therebetween such that both end edges 41c of the ferrite magnet 41 are located inside both end edges 12k of the hub part 12h with respect to the axial direction of the rear wheel 12.

Both end edges 41c of the ferrite magnet 41 which define the width G of the ferrite magnet 41 are located outside both end edges 50a of the stator core 52 which define the width of the stator core 52 with respect to the axial direction of the rear wheel 12. This enables the magnetic fluxes flowing from the ferrite magnet 41 to efficiently pass through the stator core 52, and therefore torque is efficiently obtained.

A thickness H of the ferrite magnet 41 is 8 mm. A permeance coefficient Pc of the ferrite magnet 41 is equal to or higher than 10. Thus, the ferrite magnet 41 is relatively thick. Accordingly, a large amount of magnetic fluxes flowing from the ferrite magnet 41 reach the opposing surface 53c of each of the teeth 53 through the gap 42. This enables the magnetic fluxes to efficiently pass through the stator core 52. In this preferred embodiment, the thickness H of the ferrite magnet 41 is larger than the thickness of the back yoke part 40. The thickness of the back yoke part 40 is larger than the thickness of the hub part 12h with respect to the radial direction of the rear wheel 12.

Next, a wheel-driving electric motor 135 for an electric motorcycle according to the comparative example will be described with reference to FIGS. 4B, 5B, and 6B, with the comparison between the wheel-driving electric motor 35 of the electric motorcycle 10 according to this preferred embodiment and the wheel-driving electric motor 135 of the electric motorcycle according to the comparative example.

As shown in FIG. 4B, the wheel-driving electric motor 135 of the electric motorcycle according to the comparative example is provided inside a hub part 112h. The electric motor 135 includes a support member 160 fixed to a center shaft 112a, a stator 150 fixed outside the support member 160, and a rotor 143 fixed inside the hub part 112h. The rotor 143 includes a back yoke part 140 and rare-earth magnets 141 supported inside the back yoke part 140. The rare-earth magnets 141 are opposed to the stator 150 with a gap therebetween. The rare-earth magnets 141 are thinner than the ferrite magnets 41 shown in FIG. 4A. The diameter of the electric motor 135 is smaller than the diameter of the electric motor 35 shown in FIG. 4A.

As shown in FIG. 5B, in the wheel-driving electric motor 135 of the electric motorcycle according to the comparative example, the rare-earth magnet 141 has a flat plate shape, and there is a gap P between the rare-earth magnet 141 and the back yoke part 140. As a result, in the electric motor 135, it is difficult that the back yoke part 140 sufficiently exhibits the functions as a yoke.

As shown in FIG. 6B, in the wheel-driving electric motor 135 of the electric motorcycle according to the comparative example, the width of a stator core 152 is equal to the width of the rare-earth magnet 141. Moreover, both end edges 141c of the rare-earth magnet 141 which define the width of the rare-earth magnet 141 and both end edges 150a of the stator core 152 which define the width of the stator core 152 are at the same position with respect to the axial direction of the rear wheel 112. Thus, the center of the rare-earth magnet 141 and the center of the stator core 152 are not out of alignment with respect to the axial direction of the rear wheel 112. On the other hand, in the electric motor 35 for the electric motorcycle 10 according to this preferred embodiment, the width of the ferrite magnet 41 is larger than the width of the stator core 52, and both end edges 41c which define the width of the ferrite magnet 41 are located outside both end edges 50a which define the width of the stator core 52, so that the center of the ferrite magnet 41 and the center of the stator core 52 are out of alignment. This enables the magnetic fluxes to efficiently pass through the stator core 52, and enables the rotation of the rear wheel 12 to be stabilized.

In the wheel-driving electric motor 35 of the electric motorcycle 10 according to this preferred embodiment, the ferrite magnets 41 are adopted in an outer rotor in-wheel motor of direct drive type. This can reduce an energy loss. To be specific, in an outer rotor in-wheel motor of direct drive type, torque can be improved, but there has been a problem that improvement in the torque increases the frequency of switching of the poles in the electric motor and accordingly an energy loss increases. On the other hand, in the wheel-driving electric motor 35 of the electric motorcycle 10, the ferrite magnets 41 are opposed to the stator core 50, and rotate together with the hub part 12h, the spoke part 12g, and the back yoke part 40 on the rotational axis of the rear wheel 12. Therefore, in an outer rotor in-wheel motor of direct drive type, an energy loss is suppressed low while desired torque is ensured. Thus, the electric motorcycle 10 that is inexpensive and easy to use in daily lives is provided.

FIG. 7 is a cross-sectional view schematically showing the wheel of the electric motorcycle shown in FIG. 1. In FIG. 7, for convenience of the description, the one-way clutch 12j, the sprocket 12i, and the chain 17b (see FIG. 3) are not shown.

The rear wheel 12 includes the rim part 12d, the hub part 12h, the spoke part 12g, the rotor 43, and the stator 50. The rotor 43 includes the back yoke part 40 and the ferrite magnets 41. The rim part 12d, the hub part 12h, the spoke part 12g, and the back yoke part 40 are integrally formed as a single piece. Since strength is ensured because of the integral formation, the thickness of the rim part 12d, the hub part 12h, and the spoke part 12g can be reduced.

The tire 12c is provided at the outer side of the rim part 12d with respect to the radial direction of the rear wheel 12. The hub part 12h is provided inside the rim part 12d with respect to the radial direction of the rear wheel 12. The spoke part 12g connects the rim part 12d to the hub part 12h. The ferrite magnets 41 are arranged inside the rim part 12d and outside the stator core 52 with respect to the radial direction of the rear wheel 12. The ferrite magnets 41 are configured to rotate together with the hub part 12h on the rotational axis C of the rear wheel 12. The stator core 52 is provided around the rotational axis C of the rear wheel 12 and arranged inside the rim part 12d with respect to the radial direction of the rear wheel 12. The ferrite magnets 41 are arranged inside the rim part 12d with respect to the radial direction of the rear wheel 12, supported on the back yoke part 40, and opposed to the stator core 52. The ferrite magnets 41 are configured to rotate together with the hub part 12h, the spoke part 12g, and the rim part 12d on the rotational axis C of the rear wheel 12.

The rear wheel 12 has a cover 12b provided at each of the right and left sides thereof in the transverse direction of the vehicle. An outer circumferential portion of the cover 12b with respect to the radial direction of the rear wheel 12 is in contact with side surfaces of the hub part 12h and the back yoke part 40, and fixed to the back yoke part 40 with a fixture 12n (for example, a bolt). Since the fixture 12n is provided to the back yoke part 40 made of iron, the thickness of the hub part 12h, which is formed integrally with the back yoke part 40 by casting, can be reduced.

An inner circumferential portion of the cover 12b with respect to the radial direction of the rear wheel 12 is rotatably supported on the center shaft 12a via the bearing 12p. Accordingly, the rotor 43 (the ferrite magnets 41 and the back yoke part 40), the hub part 12h, the spoke part 12g, and the rim part 12d are rotatably supported on the center shaft 12a via the covers 12b. In this preferred embodiment, the cover 12b is provided at each of the right and left sides in the transverse direction of the vehicle. However, the cover 12b may be provided at one side only. Instead of the cover 12b, a member configured to rotatably support the rotor 43 (the ferrite magnets 41 and the back yoke part 40), the hub part 12h, the spoke part 12g, and the rim part 12d on the center shaft 12a may be provided.

The stator 50 including the stator core 52 with an annular shape and the coils 51 is fixed to the center shaft 12a by means of the support member 60. As described above, the support member 60 includes the outer cylindrical part 61, the coupling part 62, and the inner cylindrical part 63.

Therefore, when the rear wheel 12 rotates, the covers 12b, the rotor 43 (the ferrite magnets 41 and the back yoke part 40), the hub part 12h, the spoke part 12g, and the rim part 12d rotate in a state where the stator core 52 is supported on the center shaft 12a via the support member 60, and their numbers of rotations are equal to one another.

Although a preferred embodiment has been described in the above, this preferred embodiment is only one preferred embodiment of the present invention. It is obvious that those skilled in the art can readily make various modifications and changes to this preferred embodiment. That is, the technical scope of the present invention should be defined based on the appended claims, and the present invention is not limited to this preferred embodiment and may be modified, for example, as follows.

Although the electric motor 35 is provided in the rear wheel 12 in the preferred embodiment described above, the present invention is not limited to this example. The electric motor 35 may be provided in the front wheel 11. Additionally, in this preferred embodiment described above, the electric motor 35 is mounted in the rear wheel 12 and the sprocket 12i is attached to the electric motor 35. In the present invention, however, it may be also possible that an electric motor is provided in a front wheel while a sprocket is provided in a rear wheel.

In this preferred embodiment, the back yoke part 40 is formed integrally with the hub part 12h, and fixed to the covers 12b. By means of the back yoke part 40 and the hub part 12h, the spoke part 12g and the rim part 12d are supported on the center shaft 12a via the covers 12b. Thus, the back yoke part 40 forms the rotor 43, and at the same time has functions as a hub. Since the back yoke part 40 has the functions as a hub, the thickness of the hub part 12h can be reduced. Thus, the rear wheel 12 as a whole can be downsized.

In this preferred embodiment, the back yoke part 40 is fixed to the covers 12b. Instead, the hub 12h may be fixed to the covers 12b, or alternatively the back yoke part 40 and the hub 12h may be fixed to the covers 12b.

In the case described in this preferred embodiment, the hub part 12h is made of a non-magnetic material and the back yoke part 40 is made of a magnetic material. However, the present invention is not limited to this example. Both the hub part 12h and the back yoke part 40 may be made of a magnetic material. In such a case, the material of the hub part 12h and the material of the back yoke part 40 may be the same or different. That is, as for the materials of the back yoke part 40, the hub part 12h, the spoke part 12g, and the rim part 12d, it suffices that at least the back yoke part 40 is made of a magnetic material. The materials of the hub part 12h, the spoke part 12g, and the rim part 12d may be either a magnetic material or a non-magnetic material.

In this preferred embodiment, the back yoke part is formed integrally with the hub part by cast into the hub part. In the present invention, the back yoke part may be formed integrally with the hub part by bonded to the hub part.

In the above, descriptions have been given based on the radial direction, the axial direction, and the circumferential direction of the rear wheel 12 as references. However, a radial direction, an axial direction, and a circumferential direction of the electric motor 35 may be used in the same way as the radial direction, the axial direction, and the circumferential direction of the rear wheel 12. In a case where the electric motor 35 is mounted in the rear wheel 12, the radial direction, the axial direction, and the circumferential direction of the rear wheel 12 are coincident with the radial direction, the axial direction, and the circumferential direction of the electric motor 35, respectively.

Next, the significance of the present invention in this field will be described.

In the field of electric vehicles, electric motorcycles, and the like, the technology development for a driving electric motor has been made with priority to the achievement of travel performance (such as high-speed travel performance and acceleration performance) that is comparable to the travel performance of an internal combustion (engine). Therefore, in the technology development for the wheel-driving electric motor, there has conventionally been a preconceived notion (technical prejudice) that improvement in the travel performance should be considered preferentially. There has also been a preconceived notion (technical prejudice) that the size of an electric motor should be reduced as much as possible such that the electric motor is mounted to a vehicle. Accordingly, a rare-earth magnet with strong magnetic force has been adopted in a rotor of a wheel-driving electric motor included in an electric vehicle, an electric motorcycle, or the like. Among rare-earth magnets, particularly, a neodymium magnet, which has significantly strong magnetic force, has been widely adopted in electric vehicles and electric motorcycles.

On the other hand, a ferrite magnet has been conventionally in wide use in automobile electrical components, electric household appliances, and the like. The magnetic force of the ferrite magnet is weaker than the magnetic force of the rare-earth magnet such as the neodymium magnet. Therefore, if the ferrite magnet is applied to a wheel-driving electric motor of an electric motorcycle, a relatively large amount of magnets are required, which would undesirably increase the size of the wheel-driving electric motor. Therefore, not the ferrite magnet but the rare-earth magnet, and particularly the neodymium magnet, has been conventionally adopted in the wheel-driving electric motor. Because of the two preconceived notions mentioned above, the ferrite magnet has not been used for the wheel-driving electric motor.

Under such circumstances, the present inventors have changed the way of thinking and deviated from the conventional two preconceived notions. The present inventors daringly adopted the ferrite magnet with weak magnetic force for an outer rotor in-wheel motor of direct drive type. Thereby, an electric motorcycle with a reduced energy loss, that is inexpensive and easy to use in daily lives, is achieved. In an electric motorcycle that travels at a relatively low speed, even when the ferrite magnet with weak magnetic force is used, a rider perceives little deterioration in riding comfort. Moreover, since acceleration performance is suppressed, relaxed riding comfort similar to that of a bicycle is achieved. In this manner, the present invention has overcome the technical prejudices (that the ferrite magnet is not suitable for a wheel-driving electric motor) that have conventionally existed in this field, and accomplishes an electric motorcycle that meets the demands of consumers. Thus, the present invention possesses quite a large significance.

A possible configuration in a case where the ferrite magnet is adopted in a wheel-driving electric motor of an electric motorcycle includes not only the configuration of the present invention but also a configuration in which a speed reducer is provided between a rotor and a wheel. The speed reducer decelerates rotation of a rotor and then transmits the decelerated rotation to a wheel. Thereby, the electric motor is used mainly with a large number of rotations. Thus, necessary torque is obtained. However, additionally providing the speed reducer complicates the structure, which leads to increased costs. Moreover, additionally providing the speed reducer involves a new risk of occurrence of troubles in the speed reducer, and accordingly a risk of an increased frequency of maintenance occurs. Under such circumstances where an electric motorcycle that is inexpensive and easy to use in daily lives is being demanded, adoption of the ferrite magnet premised on the use of the speed reducer makes no sense, and would lose the meaning of using the ferrite magnet.

The technical prerequisites of the present invention are completely different from the technical prerequisites of a technique using the speed reducer. The problem to be solved by the present invention is a problem occurring when an outer rotor in-wheel motor of direct drive type is used as a wheel-driving electric motor of an electric motorcycle (the problem that an energy loss increases due to an increase in the frequency of a motor).

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A driving wheel for a saddle-ride type electric vehicle, the driving wheel (12) comprising:

   a rim part (12d) that supports a tire (12c);
   a hub part (12h) arranged inside the rim part (12d) with respect to a radial direction of the driving wheel (12), the hub part (12h) being configured to rotate on a rotational axis (C) of the driving wheel (12), wherein an electric motor (35) is provided within the hub part (12h);
   a spoke part (12g) connecting the rim part (12d)

to the hub part (12h);
   a stator core (52) and a coil (51) provided around the rotational axis (C) of the driving wheel (12) and arranged inside a spoke connection portion (12r) of the hub part (12h) with respect to the radial direction of the driving wheel (12), the spoke connection portion (12r) being a portion to which the spoke part (12g) is connected;
   a ferrite magnet (41) arranged inside the spoke connection portion (12r) of the hub part (12h) and outside the stator core (52) with respect to the radial direction of the wheel (12), the ferrite magnet (41) being opposed to the stator core (52) and configured to rotate together with the hub part (12h), the spoke part (12g), and the rim part (12d) on the rotational axis (C) of the wheel (12); and
   a back yoke part (40) arranged inside the spoke connection portion (12r) of the hub part (12h) with respect to the radial direction of the driving wheel (12), the back yoke part (40) supporting the ferrite magnet (41);
   **characterized in that**
   the back yoke part (40) is arranged outside the ferrite magnet (41) with respect to the radial direction of the driving wheel (12); and
   a radius (M) of the electric motor (35) and a radius (R) of the rim part (12d) with respect to the radial direction of the driving wheel (12) satisfy the expression $M > (R - M)$.

2. The driving wheel of the saddle-ride type electric vehicle according to claim 1, wherein
   the ferrite magnet (41) is formed larger than a width of an opposing surface of the stator core (52) which is opposed to the ferrite magnet (41) with respect to an axial direction of the driving wheel (12), and the ferrite magnet (41) is configured to rotate together with the hub part (12h), the spoke part (12g), and the rim part (12d) at a location outside the stator core (52) with respect to the radial direction of the driving wheel (12).

3. The driving wheel of the saddle-ride type electric vehicle according to claim 2, wherein
   the ferrite magnet (41) is formed such that both end edges of the ferrite magnet (41) defining the width thereof are located outside both end edges of the stator core (52) defining the width thereof with respect to the axial direction of the driving wheel (12), and the ferrite magnet (41) is configured to rotate together with the hub part (12h), the spoke part (12g), and the rim part (12d) at a location outside the stator core (52) with respect to the radial direction of the driving wheel (12).

4. The driving wheel of the saddle-ride type electric vehicle according to any one of claims 1 to 3, wherein

the ferrite magnet (41) is supported on the back yoke part (40) such that a center of the ferrite magnet (41) and a center of the stator core (52) are out of alignment with respect to an axial direction of the driving wheel (12), and the ferrite magnet (41) is configured to rotate together with the hub part (12h), the spoke part (12g), and the rim part (12d) at a location outside the stator core (52) with respect to the radial direction of the driving wheel (12).

5. The driving wheel of the saddle-ride type electric vehicle according to any one of claims 1 to 4, wherein the ferrite magnet (41) is formed with a thickness equal to or greater than 4 mm, and configured to rotate together with the hub part (12h), the spoke part (12g), and the rim part (12d) at a location outside the stator core (52) with respect to the radial direction of the driving wheel (12).

6. The driving wheel of the saddle-ride type electric vehicle according to any one of claims 1 to 5, wherein the ferrite magnet (41) is formed with a permeance coefficient Pc equal to or higher than 10, and configured to rotate together with the hub part (12h), the spoke part (12g), and the rim part (12d) at a location outside the stator core (52) with respect to the radial direction of the driving wheel (12).

7. The driving wheel of the saddle-ride type electric vehicle according to any one of claims 1 to 6, wherein the ferrite magnet (41) is formed such that an outer surface thereof with respect to the radial direction of the driving wheel (12) has a shape following an inner surface of the back yoke part (40), and the ferrite magnet (41) is configured to, while the outer surface of the ferrite magnet (41) is supported on the inner surface of the back yoke part (40), rotate together with the hub part (12h), the spoke part (12g), and the rim part (12d) at a location outside the stator core (52) with respect to the radial direction of the driving wheel (12).

8. The driving wheel of the saddle-ride type electric vehicle according to any one of claims 1 to 7, wherein the ferrite magnet (41) is supported on the back yoke part (40) such that the number of magnetic poles in a ferrite magnet (41) rotating together with the hub part (12h), the spoke part (12g), and the rim part (12d) at a location outside the stator core (52) with respect to the radial direction of the driving wheel (12) is thirty or more and fifty-four or less.

9. A saddle-ride type electric vehicle (10) comprising a driving wheel (12) according to any one of claims 1 to 8.

**Patentansprüche**

1. Ein Antriebsrad für ein Elektrofahrzeug vom Sattelreittyp, wobei das Antriebsrad (12) folgende Merkmale aufweist:

   ein Felgenteil (12d), das einen Reifen (12c) trägt;
   ein Nabenteil (12h), das in dem Felgenteil (12d) bezüglich einer Radialrichtung des Antriebsrads (12) angeordnet ist, wobei das Nabenteil (12h) ausgebildet ist, um sich auf einer Drehachse (C) des Antriebsrads (12) zu drehen, wobei ein Elektromotor (35) in dem Nabenteil (12h) vorgesehen ist;
   ein Speichenteil (12g), das das Felgenteil (12d) mit dem Nabenteil (12h) verbindet;
   einen Statorkern (52) und eine Spule (51), die um die Drehachse (C) des Antriebsrads (12) herum vorgesehen sind, und in einem Speichenverbindungsabschnitt (12r) des Nabenteils (12h) bezüglich der Radialrichtung des Antriebsrads (12) angeordnet sind, wobei der Speichenverbindungsabschnitt (12r) ein Abschnitt ist, mit dem das Speichenteil (12g) verbunden ist;
   einen Ferritmagneten (41), der in dem Speichenverbindungsabschnitt (12r) des Nabenteils (12h) und außerhalb des Statorkerns (52) bezüglich der Radialrichtung des Rads (12) angeordnet ist, wobei der Ferritmagnet (41) dem Statorkern (52) gegenüberliegt und ausgebildet ist, um sich zusammen mit dem Nabenteil (12h), dem Speichenteil (12g) und dem Felgenteil (12d) auf der Drehachse (C) des Antriebsrads (12) zu drehen; und
   ein hinteres Jochteil (40), das in dem Speichenverbindungsabschnitt (12r) des Nabenteils (12h) bezüglich der Radialrichtung des Antriebsrads (12) vorgesehen ist, wobei das hintere Jochteil (40) den Ferritmagneten (41) trägt;
   **dadurch gekennzeichnet, dass**
   das hintere Jochteil (40) bezüglich der Radialrichtung des Antriebsrads (12) außerhalb des Ferrigmagneten (41) angeordnet ist; und
   ein Radius (M) des Elektromotors (35) und ein Radius (R) des Felgenteils (12d) bezüglich der Radialrichtung des Antriebsrads (12) den Ausdruck M > (R - M) erfüllen.

2. Das Antriebsrad des Elektrofahrzeugs vom Sattelreittyp gemäß Anspruch 1, bei dem
   der Ferritmagnet (41) größer gebildet ist als eine Breite einer gegenüberliegenden Oberfläche des Statorkerns (52), der dem Ferritmagneten (41) bezüglich einer Axialrichtung des Antriebsrads (12) gegenüberliegt, und der Ferritmagnet (41) ausgebildet ist, um sich zusammen mit dem Nabenteil (12h), dem Speichenteil (12g) und dem Felgenteil (12d) an einer Stelle außerhalb des Statorkerns (52) bezüglich der Radialrichtung des Antriebsrads (12) zu drehen.

3. Das Antriebsrad des Elektrofahrzeugs vom Sattelreittyp gemäß Anspruch 2, bei dem der Ferritmagnet (41) gebildet ist, so dass beide Endkanten des Ferritmagneten (41), die die Breite desselben definieren, bezüglich der Axialrichtung des Antriebsrads (12) außerhalb beider Endkanten des Statorkerns (52), die die Breite desselben definieren, angeordnet sind, und der Ferritmagnet (41) ausgebildet ist, um sich zusammen mit dem Nabenteil (12h), dem Speichenteil (12g) und dem Felgenteil (12d) an einer Stelle außerhalb des Statorkerns (52) bezüglich der Radialrichtung des Antriebsrads (12) zu drehen.

4. Das Antriebsrad des Elektrofahrzeugs vom Sattelreittyp gemäß einem der Ansprüche 1 bis 3, bei dem der Ferritmagnet (41) auf dem hinteren Jochteil (40) getragen wird, so dass eine Mitte des Ferritmagneten (41) und eine Mitte des Statorkerns (52) bezüglich einer Axialrichtung des Antriebsrads (12) nicht ausgerichtet sind, und der Ferritmagnet (41) ausgebildet ist, um sich zusammen mit dem Nabenteil (12h), dem Speichenteil (12g) und dem Felgenteil (12d) an einer Stelle außerhalb des Statorkerns (52) bezüglich der Radialrichtung des Antriebsrads (12) zu drehen.

5. Das Antriebsrad des Elektrofahrzeugs vom Sattelreittyp gemäß einem der Ansprüche 1 bis 4, bei dem der Ferritmagnet (41) mit einer Dicke gleich oder größer 4 mm gebildet ist und ausgebildet ist, um sich zusammen mit dem Nabenteil (12h), dem Speichenteil (12g) und dem Felgenteil (12d) an einer Stelle außerhalb des Statorkerns (52) bezüglich der Radialrichtung des Antriebsrads (12) zu drehen.

6. Das Antriebsrad des Elektrofahrzeugs vom Sattelreittyp gemäß einem der Ansprüche 1 bis 5, bei dem der Ferritmagnet (41) mit einem Permeanzkoeffizienten Pc gleich oder höher als 10 gebildet ist und ausgebildet ist, um sich zusammen mit dem Nabenteil (12h), dem Speichenteil (12g) und dem Felgenteil (12d) an einer Stelle außerhalb des Statorkerns (52) bezüglich der Radialrichtung des Antriebsrads (12) zu drehen.

7. Das Antriebsrad des Elektrofahrzeugs vom Sattelreittyp gemäß einem der Ansprüche 1 bis 6, bei dem der Ferritmagnet (41) gebildet ist, so dass eine Außenoberfläche desselben bezüglich der Radialrichtung des Antriebsrads (12) eine Form aufweist, die einer Innenoberfläche des hinteren Jochteils (40) folgt, und der Ferritmagnet (41) ausgebildet ist, um sich, während die Außenoberfläche des Ferritmagneten (41) auf der Innenoberfläche des hinteren Jochteils (40) getragen wird, zusammen mit dem Nabenteil (12h), dem Speichenteil (12g) und dem Felgenteil (12d) an einer Stelle außerhalb des Statorkerns (52) bezüglich der Radialrichtung des Antriebsrads (12) zu drehen.

8. Das Antriebsrad des Elektrofahrzeugs vom Sattelreittyp gemäß einem der Ansprüche 1 bis 7, bei dem der Ferritmagnet (41) auf dem hinteren Jochteil (40) getragen wird, so dass die Anzahl von Magnetpolen in einem Ferritmagneten (41), der sich zusammen mit dem Nabenteil (12h), dem Speichenteil (12g) und dem Felgenteil (12d) bezüglich der Radialrichtung des Antriebsrads (12) an einer Stelle außerhalb des Statorkerns (52) dreht, dreißig oder mehr und vierundfünfzig oder weniger beträgt.

9. Ein Elektrofahrzeug vom Sattelreittyp (10), das ein Antriebsrad (12) gemäß einem der Ansprüche 1 bis 8 aufweist.

## Revendications

1. Roue d'entraînement pour véhicule électrique de type à selle, la roue d'entraînement (12) comprenant:

une partie de jante (12d) qui supporte un pneu (12c);
une partie de moyeu (12h) disposée à l'intérieur de la partie de jante (12d) par rapport à une direction radiale de la roue d'entraînement (12), la partie de moyeu (12h) étant configurée pour tourner sur un axe de rotation (C) de la roue d'entraînement (12h), où un moteur électrique (35) est prévu dans la partie de moyeu (12h);
une partie de rayons (12g) reliant la partie de jante (12d) à la partie de moyeu (12h);
un noyau de stator (52) et une bobine (51) disposés autour de l'axe de rotation (C) de la roue d'entraînement (12) et disposés à l'intérieur d'une partie de connexion de rayons (12r) de la partie de moyeu (12h) par rapport à la direction radiale de la roue d'entraînement (12), la portion de connexion de rayons (12r) étant une partie à laquelle est connectée la partie de rayons (12g);
un aimant en ferrite (41) disposé à l'intérieur de la partie de connexion de rayons (12r) de la partie de moyeu (12h) et à l'extérieur du noyau de stator (52) par rapport à la direction radiale de la roue (12), l'aimant en ferrite (41) étant opposé au noyau de stator (52) et configuré de manière à tourner ensemble avec la partie de moyeu (12h), la partie de rayons (12g) et la partie de jante (12d) sur l'axe de rotation (C) de la roue (12); et
une partie de culasse arrière (40) disposée à l'intérieur de la partie de connexion de rayons (12r) de la partie de moyeu (12h) par rapport à la direction radiale de la roue d'entraînement (12), la partie de culasse arrière (40) supportant l'aimant en ferrite (41);
**caractérisée par le fait que**
la partie de culasse arrière (40) est disposée à l'extérieur de l'aimant en ferrite (41) par rapport à la direction radiale de la roue d'entraînement (12); et
un rayon (M) du moteur électrique (35) et un rayon (R) de la partie de jante (12d) par rapport à la direction radiale de la roue d'entraînement (12) satisfont l'expression M > (R - M).

2. Roue d'entraînement du véhicule électrique de type à selle selon la revendication 1, dans laquelle l'aimant en ferrite (41) est formée plus grande qu'une largeur d'une surface opposée du noyau de stator (52) qui est opposée à l'aimant en ferrite (41) par rapport à une direction axiale de la roue d'entraînement (12), et l'aimant en ferrite (41) est configuré de manière à tourner ensemble avec la partie de moyeu (12h), la partie de rayons (12g) et la partie de jante (12d) à un endroit à l'extérieur du noyau de stator (52) par rapport à la direction radiale de la roue d'entraînement (12).

3. Roue d'entraînement du véhicule électrique de type à selle selon la revendication 2, dans laquelle l'aimant en ferrite (41) est formée de sorte que les deux bords d'extrémité de l'aimant en ferrite (41) définissant sa largeur soient situés à l'extérieur des deux bords d'extrémité du noyau de stator (52) définissant sa largeur par rapport à la direction axiale de la roue d'entraînement (12), et l'aimant en ferrite (41) est configuré de manière à tourner ensemble avec la partie de moyeu (12h), la partie de rayons (12g) et la partie de jante (12d) à un endroit à l'extérieur du noyau de stator (52) par rapport à la direction radiale de la roue d'entraînement (12).

4. Roue d'entraînement du véhicule électrique de type à selle selon l'une quelconque des revendications 1 à 3, dans laquelle l'aimant en ferrite (41) est supporté sur la partie de culasse arrière (40) de sorte qu'un centre de l'aimant en ferrite (41) et un centre du noyau de stator (52) soient désalignés par rapport à une direction axiale de la roue d'entraînement (12), et l'aimant en ferrite (41) est configuré de manière à tourner ensemble avec la partie de moyeu (12h), la partie de rayons (12g) et la partie de jante (12d) à un endroit à l'extérieur du noyau de stator (52) par rapport à la direction radiale de la roue d'entraînement (12).

5. Roue d'entraînement du véhicule électrique de type à selle selon l'une quelconque des revendications 1 à 4, dans laquelle l'aimant en ferrite (41) est formé avec une épaisseur égale ou supérieure à 4 mm, et configuré de manière à tourner ensemble avec la partie de moyeu (12h), la partie de rayons (12g) et la partie de jante (12d) à un endroit à l'extérieur du noyau de stator (52) par rapport à la direction radiale de la roue d'entraînement (12).

6. Roue d'entraînement du véhicule électrique de type à selle selon l'une quelconque des revendications 1 à 5, dans laquelle l'aimant en ferrite (41) est formé avec un coefficient de perméance Pc égal ou supérieur à 10, et configuré de manière à tourner ensemble avec la partie de moyeu (12h), la partie de rayons (12g) et la partie de jante (12d) à un endroit à l'extérieur du noyau de stator (52) par rapport à la direction radiale de la roue d'entraînement (12).

7. Roue d'entraînement du véhicule électrique de type à selle selon l'une quelconque des revendications 1 à 6, dans laquelle l'aimant en ferrite (41) est formé de sorte qu'une surface extérieure de ce dernier par rapport à la direction radiale de la roue d'entraînement (12) présente une forme qui suit une surface intérieure de la partie de culasse arrière (40), et l'aimant en ferrite (41) est configuré de manière à tourner, tandis que la surface extérieure de l'aimant en ferrite (41) est supportée sur la surface intérieure de la partie de culasse arrière (40), ensemble avec la partie de moyeu (12h), la partie de rayons (12g) et la partie de jante (12d) à un endroit à l'extérieur du noyau de stator (52) par rapport à la direction radiale de la roue d'entraînement (12).

8. Roue d'entraînement du véhicule électrique de type à selle selon l'une quelconque des revendications 1 à 7, dans laquelle l'aimant en ferrite (41) est supporté sur 1a partie de culasse arrière (40) de sorte que le nombre de pôles magnétiques dans un aimant en ferrite (41) tournant ensemble avec la partie de moyeu (12h), la partie de rayons (12g) et la partie de jante (12d) à un endroit à l'extérieur du noyau de stator (52) par rapport à la direction radiale de la roue d'entraînement (12) soit de trente ou plus et de clinquante-quatre ou moins.

9. Véhicule électrique de type à selle (10) comprenant une roue d'entraînement (12) selon l'une quelconque des revendications 1 à 8.

FIG.1

FIG.2

FIG.3

FIG.4A

FIG.4B

FIG.5A

FIG.5B

FIG.6A

FIG.6B

FIG.7

**EP 2 595 285 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002331986 A
- DE 10219332 A1